# EUROPÄISCHE PATENTANMELDUNG

(11) **EP 0 999 127 A2**
(43) Veröffentlichungstag der Anmeldung: **10.05.2000**
(21) Anmeldenummer: 99121194.7
(22) Anmeldetag: 23.10.1999
(51) Int. Cl.: B64D 3/02, G09F 21/12

(54) **Luftschleppvorrichtung, insbesondere zur Luftwerbung**

(30) Priorität: 02.11.1998 DE 29819485 U
(71) Anmelder: Konzok, Michael, 27777 Ganderkesee (DE)
(72) Erfinder: Konzok, Michael, 27777 Ganderkesee (DE)
(74) Vertreter: Möller, Friedrich, Dipl.-Ing.

(57) **Zusammenfassung**

Luftschleppvorrichtungen dienen üblicherweise zu Werbezwecken. Sie verfügen über ein flaggenartiges Banner (11), das von einem Schleppflugzeug (10) durch die Luft gezogen wird. Das Banner (11) wird auf dem Boden liegend vom vorbeifliegenden Schleppflugzeug (10) erfasst und dann in die Luft gezogen. Hierbei treten erhebliche Kräfte auf, und zwar insbesondere an einem Schleppseil (12) zur Verbindung des Banners (11) mit dem Schleppflugzeug (10). Dadurch sind der Größe des Banners (11) natürliche Grenzen gesetzt.

Erfindungsgemäß weist das Schleppseil (12) mindestens eine unter Last den Abstand des Banners (11) zum Schleppflugzeug (10) vergrößernde Einrichtung auf, insbesondere eine Seil-schlupfbremse (21). Die Kräfte im Schleppseil (12) beim Aufnehmen des Banners (11) werden so durch ein kontrolliertes Nachgeben des Schleppseils (12) erheblich reduziert, wodurch es möglich ist, auch größere Banner vom vorbeifliegenden Schleppflugzeug (10) beschädigungslos aufzunehmen.

## Beschreibung

Die Erfindung betrifft eine Luftschleppvorrichtung, insbesondere zur Luftwerbung, gemäß dem Oberbegriff des Anspruchs 1 und/oder 7.

Es werden Gegenstände von einem Schleppflugzeug zu verschiedenen Zwecken durch die Luft gezogen. Insbesondere geschieht dieses zu Werbezwecken. Es sind Luftschleppvorrichtungen bekannt, die über ein längliches, flaggenartiges Banner verfügen, das mit mindestens einem am Schleppflugzeug angehängten Schleppseil in Verbindung steht. Das Banner ist mit denjenigen Informationen versehen, die bei der Luftwerbung den Betrachtern am Boden übermittelt werden sollen.

Die Luftschleppvorrichtung, nämlich das Banner und sein Schleppseil bzw. mehrere Schleppseile, werden dadurch in die Luft gebracht, daß sie am Boden liegend von einem vorbeifliegenden Flugzeug erfaßt werden, indem ein Fanghaken des Flugzeugs ein Fangmittel an einem freien (vorderen) Ende des Schleppseils ergreift. Nachdem auf diese Weise die Verbindung der Luftschleppvorrichtung mit dem Flugzeug hergestellt ist, erfährt sie eine ruckartige Mitnahme durch das vorbeifliegende Flugzeug. Dabei werden auf das Banner und das einzige oder auch mehrere Schleppseile kurzfristig erhebliche Kräfte ausgeübt. Das ist ein wesentlicher Grund dafür, weswegen der Größe der Banner natürliche Grenzen gesetzt sind. Bislang finden deshalb nur Banner Verwendung, die eine Fläche von bis zu 150 m² aufweisen. Man ist aber bestrebt, die Fläche der Banner für die Luftwerbung zu vergrößern, damit die Werbung vom Betrachter auf dem Boden besser erkennbar ist und/oder mehr Informationen, beispielsweise längere Werbeslogans, auf dem Banner in einer zur Wahrnehmung auf dem Boden ausreichenden Größe unterbringbar sind.

Ausgehend vom Vorstehenden liegt der Erfindung die Aufgabe zugrunde, eine Luftschleppvorrichtung zu schaffen, die so ausgebildet ist, daß sie sich selbst bei einer Bannergröße, die über dem bisher üblichen, insbesondere über 150 m², liegt, gefahr- und beschädigungslos durch ein Vorbeifliegen des Schleppflugzeugs vom Boden aufnehmen läßt.

Eine Luftschleppvorrichtung zur Lösung dieser Aufgabe weist die Merkmale des Anspruchs 1 auf. Dadurch, daß das oder jedes Schleppseil mindestens eine unter Last den Abstand des Banners zum Schleppflugzeug vergrößernde Einrichtung aufweist, die eine Vergrößerung der Länge jedes Schleppseils zuläßt, steht ein Weg zum Beschleunigen insbesondere des Banners auf die Geschwindigkeit des vorbeifliegenden Schleppflugzeugs zur Verfügung, der größer ist als die natürliche Dehnbarkeit des Schleppseils bzw. der Schleppseile. Die auf den Banner beim Aufnehmen der Luftschleppvorrichtung ausgeübten Beschleunigungskräfte werden durch ein kontrolliertes Nachgeben der Schleppleine erheblich reduziert. Dadurch ist es möglich, auch größere Banner, und zwar beispielsweise bis zu 1.000 m², vom vorbeifliegenden Flugzeug aufzunehmen, ohne daß die Gefahr besteht, daß dabei das Schleppseil und/oder das Banner zerstört oder beschädigt werden und das Schleppflugzeug beim Beschleunigen der Luftschleppvorrichtung so weit abgebremst wird, daß die Flugstabilität bzw. die Flugfähigkeit des Schleppflugzeugs beeinträchtigt werden.

Es sind verschiedene Einrichtungen denkbar, die während der Beschleunigungsphase des Banners beim Aufnehmen desselben vom Boden den Abstand zum Schleppflugzeug vergrößern. Gemeinsam weisen alle diese Einrichtungen die Eigenschaft auf, daß sie die Zugkraft, die beim Aufnehmen der Luftschleppvorrichtung auf das Schleppseil oder auf mehrere Schleppseile ausgeübt wird, begrenzen, indem mit zunehmender Zuglast auf das Schleppseil oder die Schleppseile eine kontinuierliche, vorzugsweise gleichmäßige, Verlängerung des Zugseils oder der Zugseile erfolgt, und zwar so lange, bis das Banner nahezu auf die Geschwindigkeit des Schleppflugzeugs beschleunigt worden ist und dadurch die Zugkraft im Schleppseil bzw. in den Schleppseilen einen unkritischen Wert erreicht. Es wird danach durch die Einrichtung die Länge des Schleppseils bzw. der Schleppseile konstant gehalten, so daß während des Hinterherschleppens des Banners hinter dem Schleppflugzeug sich der Abstand zwischen beiden nicht oder nicht mehr nennenswert ändert.

Eine Einrichtung zur Vergrößerung des Abstands zwischen dem Banner und dem Schleppflugzeug ist als Seilschlupfbremse ausgebildet. Diese Seilschlupfbremse kann zwischen dem Schleppseil und dem Fangmittel zum Verbinden der Luftschleppvorrichtung mit dem Schleppflugzeug angeordnet sein. Es ist auch möglich, diese Schlupfbremse zwischen zwei getrennten Teilabschnitten des Schleppseils anzuordnen. Schließlich kann die Seilschlupfbremse auch im Bereich einer Schlaufe des durchgehenden Zugseils vorgesehen sein.

Gebildet ist die Seilschlupfbremse durch vorzugsweise einen platten- bzw. scheibenförmigen Körper mit mindestens zwei Durchgangsbohrungen zum Durchstecken des Schleppseils oder seiner Teilabschnitte. Vorzugsweise verfügt der Körper der Seilschlupfbremse über mehr als zwei Durchgangsbohrungen, durch die das Schleppseil bzw. ein Teilabschnitt desselben hindurchgezogen sind, so daß das Schleppseil bzw. der Teilabschnitt desselben im Bereich des Körpers schlangenförmig verlaufen. Dieser schlangenförmige Verlauf des Schleppseils bzw. seines Teilabschnitts durch den Körper führt während des Schleppens des Banners zu einer rutschfesten Verbindung zwischen dem Schleppseil und dem Körper. Nur bei einer Zugbelastung des Schleppseils, die einen bestimmten Grenzwert überschreitet, der zweckmäßigerweise unter der Arbeitslast des Zugseils liegt, findet ein Schlupf zwischen dem Körper und dem Schleppseil statt. Die Kraft, bei der ein Schlupf zwischen dem Körper und dem Schleppseil stattfindet, ist dadurch einstellbar, daß das Schleppseil durch eine entsprechende Anzahl von Durchgangsbohrungen im Körper hindurchgeschlungen wird. Es läßt sich so die Seilschlupfbremse an unterschiedliche Gegebenheiten anpassen, insbesondere an unterschiedlich große Banner und unterschiedliche Aufnahmegeschwindigkeiten des Banners vom Schleppflugzeug.

Eine weitere Luftschleppvorrichtung zur Lösung der eingangs genannten Aufgabe weist die Merkmale des Anspruchs 7 auf. Durch das Vorhandensein mindestens eines Randstabilisierungsmittels wird das hinter dem Schleppflugzeug durch die Luft geschleppte Banner gestreckt. Das Randstabilisierungsmittel kann einem, aber auch mehreren Rändern des Banners zugeordnet sein.

Vorzugsweise ist das Randstabilisierungsmittel als ein durch Luft aufblähbarer Körper ausgebildet, bei dem es sich insbesondere um eine Art Luftsack handelt. Dieser Körper bzw. Luftsack wird beim Durchdieluftschleppen des Banners zwangsläufig mit Luft gefüllt bzw. von Luft durchströmt, wodurch der Körper bzw. Luftsack sich aufbläht zu einem dreidimensionalen Gebilde, das das Banner stabilisiert. Beim ruhenden Banner kann der dann nicht mit Luft beaufschlagte Luftsack flächig zusammengedrückt werden, ohne ein Verstauen des Banners nennenswert zu behindern. Der Luftsack besteht dazu aus einem biegeschlaffen Material, vorzugsweise aus einem Textilmaterial.

Hierbei kann es sich um das gleiche Material handeln, aus dem auch der Banner besteht.

Der Luftsack bildet einen Teil des Banners und ist dazu zweckmäßigerweise mit dem flächigen Teil des Banners, nämlich einer Werbeträgerfläche desselben, verbunden. Dies kann durch Kleben, Nähen oder sonstige Verbindungstechniken geschehen. In diesem Falle ist der Luftsack dauerhaft mit der Werbeträgerfläche des Banners verbunden. Es ist aber auch denkbar, den Luftsack lösbar mit dem übrigen Teil des Banners zu verbinden, und zwar beispielsweise durch Reißverschlüsse, Klettverbindungen oder dergleichen. Der Luftsack kann dann gegebenenfalls für verschiedene Banner verwendet werden.

Vorzugsweise ist der Luftsack dem hinteren Querrand des Banners bzw. seiner Werbeträgerfläche, zugeordnet. Dieser hintere Querrand neigt besonders zum Flattern und somit zum Ausfransen, so daß die Anordnung des Luftsacks am hinteren Querrand einen wirksamen Schutz des Banners bietet. Darüber hinaus läßt sich durch die Anordnung des Luftsacks am hinteren Querrand des Banners am einfachsten Luft in bzw. durch den Luftsack leiten, wodurch dieser zuverlässig aufgebläht wird.

Gemäß einer bevorzugten Weiterbildung der Erfindung ist einem mindestens teilweise offenen vorderen Querrand des Luftsacks mindestens eine Lufteintrittsöffnung zugeordnet. Dadurch ist zuverlässig sichergestellt, daß der Luftsack beim Schleppen des Banners durch die Luft sich aufblähen kann. Ein zuverlässiges Offenhalten der oder jeder Lufteintrittsöffnung wird erreicht, indem sie mit Randversteifungen versehen wird. Diese sorgen dafür, daß in den noch nicht aufgeblähten Luftsack Luft durch die Lufteintrittsöffnungen gelangen kann, also ein anfängliches Offenhalten jeder Lufteintrittsöffnung gewährleistet ist.

Bevorzugte Ausführungsbeispiele der Erfindung werden nachfolgend anhand der Zeichnung näher erläutert. In dieser zeigen:

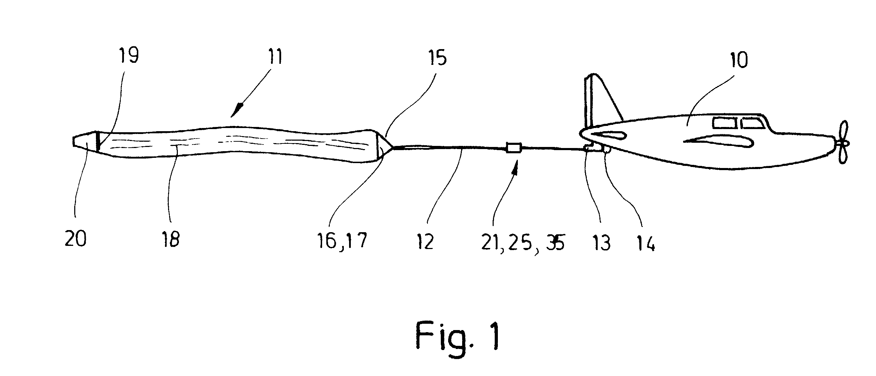

- Fig. 1: eine erfindungsgemäße Luftschleppvorrichtung hinter einem sich in der Luft befindlichen Schleppflugzeug,
- Fig. 2: eine Seitenansicht eines ersten Ausführungsbeispiels einer Einrichtung zum kontrollierten Nachgeben eines Schleppseils,
- Fig. 3: eine um 90° gedrehte Ansicht der Einrichtung der Fig. 3,
- Fig. 4: eine alternative Ausführungsform einer Einrichtung zum Nachgeben des Schleppseils in einer Seitenansicht,
- Fig. 5: eine um 90° gedrehte Ansicht der Einrichtung der Fig. 4,
- Fig. 6: eine Ansicht eines anderen Ausführungsbeispiels einer Einrichtung zur kontrollierten Längung des Schleppseils,
- Fig. 7: eine Draufsicht auf einen hinteren Teil eines Banners,
- Fig. 8: eine Seitenansicht des hinteren Teils des Banners der Fig. 7, und
- Fig. 9: einen vergrößerten Schnitt IX-IX durch den Banner der Fig. 8.

Die hier gezeigte Luftschleppvorrichtung dient zur Luftwerbung. Die Luftschleppvorrichtung wird von einem Schleppflugzeug 10 durch die Luft geschleppt und dadurch ein mit der betreffenden Werbung versehener Banner 11 ausgestreckt, damit die Werbung auf dem Banner 11 von Personen auf dem Boden wahrnehmbar ist.

Die Luftschleppvorrichtung besteht im wesentlichen aus einem im gezeigten Ausführungsbeispiel einzigen Schleppseil 12 und das Banner 11. Das dem Schleppflugzeug 10 zugewandte Ende des Schleppseils 12 ist mit einem Fangmittel, bei dem es sich im einfachsten Falle um einen Ring 13 handeln kann, versehen. Der Ring 13 oder dergleichen ist mit einem Fanghaken 14 am Heck des Schleppflugzeugs 10 lösbar verbunden. Das dem Schleppflugzeug 10 weggewandte hintere Ende des Schleppseils 12 ist über ein starres, dreieckförmiges Verbindungsteil 15 mit einer zum Schleppflugzeug 10 weisenden, vorderen Querkante 16 des Banners verbunden. Das Verbindungsteil 15 ist mit einer sich über die Querkante 16 erstreckenden, geraden Stange 17 des Verbindungsteils 15 vorzugsweise unlösbar verbunden, indem ein an die Querkante 16 anschließender Randbereich des Banners 11 um die Stange 17 herumgelegt und hinter der Stange 17 mit dem übrigen Teil des Banners 11 verbunden ist, und zwar insbesondere durch Vernähen.

Das Banner 11 setzt sich zusammen aus einem länglichen, streifenförmigen Teil zur Bildung einer Werbeträgerfläche 18 und einem Randstabilisierungsmittel, bei dem es sich im gezeigten Ausführungsbeispiel um einen der hinteren Querkante 19 der streifenförmigen Werbeträgerfläche 18 zugeordneten Luftsack 20 handelt.

Das Banner 11 ist im wesentlichen aus einem biegeschlaffen Material gebildet, und zwar vorzugsweise aus einem Gewebe, einer Folie oder einem Laminat aus mindestens einer Folie und Verstärkungssträngen bzw. einem Gewebe. Die Werbeträgerfläche 18 und der Luftsack 20 können aus dem gleichen Gewebe- und/oder Folienmaterial gebildet sein. Auf der Werbeträgerfläche 18 ist die betreffende Werbung aufgebracht. Vorzugsweise ist dazu die Werbeträgerfläche 18 mit der betreffenden Werbung bedruckt oder in sonstiger Weise beschriftet.

In erfindungsgemäß besonderer Weise ist das Schleppseil 12 ausgebildet, und zwar derart, daß insbesondere beim Aufnehmen der Luftschleppvorrichtung durch das an der auf dem Boden liegenden Luftschleppvorrichtung vorbeiliegende Schleppflugzeug 10 der Abstand des Banners 11 zum Schleppflugzeug 10 sich vergrößern kann, indem die Länge des Schleppseils 12 über ihre natürliche Dehnbarkeit hinaus vergrößert wird. Die beim Aufnehmen der Luftschleppvorrichtung, insbesondere zum Beschleunigen des Banners 11, auf das Schleppseil 12 und das Banner 11 ausgeübten Beschleunigungskräfte werden dadurch reduziert, wodurch auch Banner 11 mit einer Größe, die deutlich über dem bisher üblichen liegt, nämlich bis zu 1.000 m² betragen kann, beschädigungslos und ohne eine Gefährdung des Schleppflugzeugs 10 in die Luft gebracht werden können.

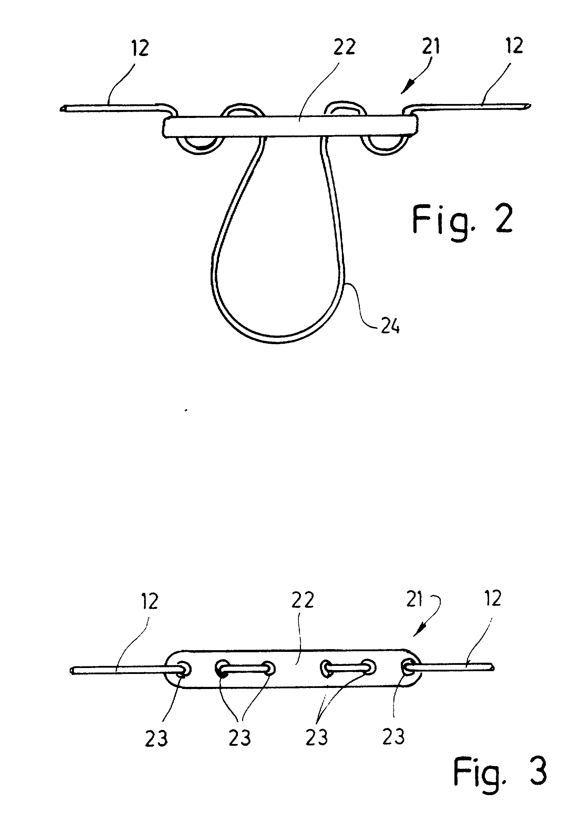

Die in den Fig. 2 bis 5 gezeigten Einrichtungen zum Vergrößern des Abstands zwischen dem Banner 11 und dem Schleppflugzeug 10 durch eine allmähliche Vergrößerung der Länge des Schleppseils 12 durch ein kontrolliertes Nachgeben desselben sind nach Art einer Seilschlupfbremse ausgebildet. Diese Einrichtungen zeichnen sich durch einen festen Körper aus, durch den das Schleppseil 12 oder ein Teil des Schleppseils bereichsweise hindurchgeschoren ist. Dabei entsteht zwischen dem betreffenden Bereich des Schleppseils 12 und dem Körper eine Seilreibung, die ein kontrolliertes Hindurchrutschen des Schleppseils 12 durch den Körper gewährleistet.

Die in den Fig. 2 und 3 gezeigte Seilschlupfbremse 21 ist im Verlauf des durchgehenden Schleppseils 12 angeordnet. Die Seilschlupfbremse 21 besteht aus einem länglichen, plattenartigen Körper 22 mit einer Mehrzahl von in Längsrichtung des Schleppseils 12 mit Abstand aufeinanderfolgenden Durchgangsbohrungen 23. Der hier gezeigte plattenartige Körper 22 verfügt über sechs gleiche Durchgangsbohrungen 23, wobei auch mehr oder weniger als sechs Durchgangsbohrungen 23 vorgesehen sein können. Die Durchgangsbohrungen 23 sind mit dem etwa gleichen Abstand im plattenartigen Körper 22 angeordnet. Im hier gezeigten Ausführungsbeispiel ist der Abstand zwischen den beiden mittleren Durchgangsbohrungen 23 etwas größer. Durch alle sechs Durchgangsbohrungen 23 des plattenartigen Körpers 22 ist das Schleppseil 12 hindurchgeführt. Der im Bereich des plattenartigen Körpers 22 sich befindende Abschnitt des Schleppseils 12 verläuft dadurch schlangenartig durch den Körper 22 hindurch. Im Bereich zwischen den beiden mittleren Durchgangsbohrungen 23 ist das Schleppseil 12 so durch den plattenartigen Körper 22 hindurchgeführt, daß das Schleppseil 12 eine Schlaufe 24 bildet. Die Größe der Schlaufe und damit der zwischen den beiden mittleren Durchgangsbohrungen 23 freiliegende Bereich des Schleppseils 12 ist so bemessen, daß während des Aufnehmens der Luftschleppvorrichtung, und zwar insbesondere während der Beschleunigung des Banners 11, der Vorrat des Schleppseils 12 im Bereich der Schlaufe 24 verringert wird und dadurch sich das Schleppseil 12 praktisch längt zur Vergrößerung des Abstands zwischen dem Banner 11 und dem Schleppflugzeug 10. Die Verringerung der Größe der Schlaufe 24 beim Aufnehmen der Luftschleppvorrichtung erfolgt dadurch, daß die auf beiden Seiten an die Schlaufe 24 angrenzenden Bereiche des Schleppseils 12, die durch jeweils drei aufeinanderfolgende Durchgangsbohrungen 23 im plattenförmigen Körper 22 hindurchgeschlängelt sind, infolge der beim Aufnehmen der Luftschleppvorrichtung und die dazu notwendige Beschleunigung des Banners 11 auf das Schleppseil 12 ausgeübte Zugkraft zu einem beidseitigen Hindurchrutschen des Schleppseils 12 durch die Durchgangsbohrungen 23 im Körper 22 der Seilschlupfbremse 21 führt. Dies kann so weit gehen, daß die Schlaufe 24 beim Auftreten der größten Zugkraft im Schleppseil 12 nahezu oder ganz beseitigt wird. Das Schleppseil 12 kann sich dann nach dem Beschleunigen des Banners 11 nicht mehr oder nicht mehr nennenswert verlängern.

Durch die Größe der Schlaufe 24 und/oder durch eine Vergrößerung oder Verringerung der Anzahl der Durchgangsbohrungen 23 im plattenartigen Körper 22 läßt sich die Bremswirkung der Seilschlupfbremse 21 an die jeweils vorherrschenden Bedingungen anpassen. Es ist auch denkbar, daß das Schleppseil 12 durch zwei oder vier der sechs Durchgangsbohrungen 23 im plattenförmigen Körper 22 hindurchgezogen wird.

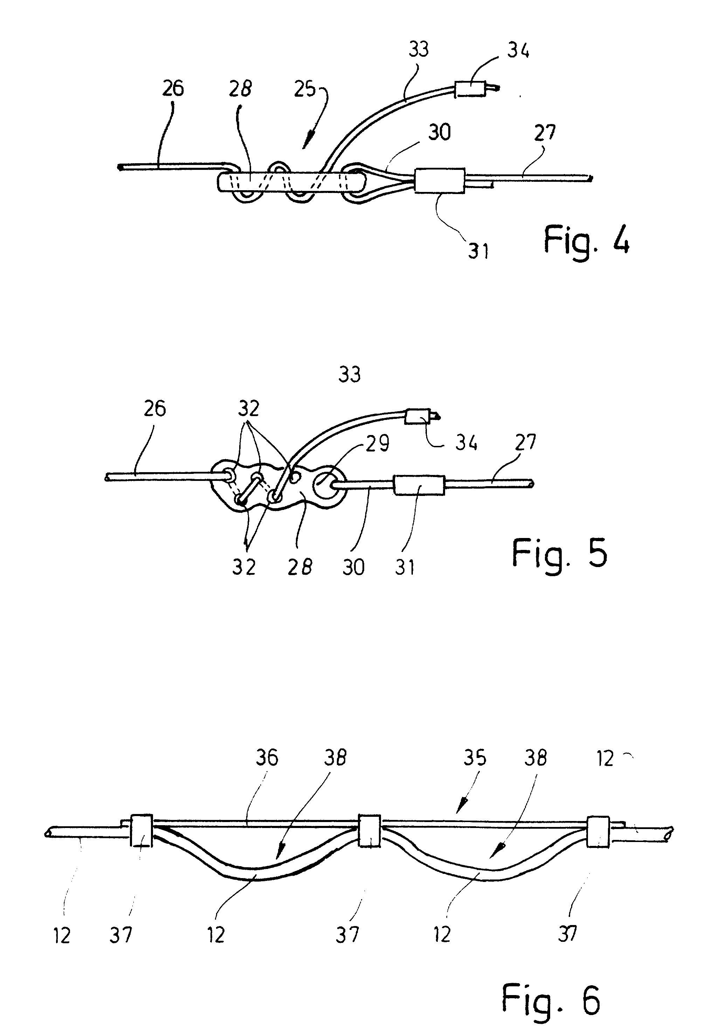

Die Fig. 4 und 5 zeigen ein anderes Ausführungsbeispiel einer Seilschlupfbremse 25, die im prinzipiellen Aufbau und in der Wirkungsweise der Seilschlupfbremse 21 der Fig. 2 und 3 entspricht. Diese Schlupfbremse 25 ist zwischen zwei Teilen des Schleppseils 12 angeordnet. Dabei verbindet die Seilschlupfbremse 25 ein bannerseitiges Schleppseilteil 26 mit einem schleppflugzeugseitigen Schleppseilteil 27.

Die Seilschlupfbremse 25 verfügt auch über einen plattenförmigen Körper 28. Dieser ist mit einer Durchgangsbohrung 29 versehen, durch die das dem plattenförmigen Körper 28 zugewandte Ende des schleppflugzeugseitigen Schleppseilteils 27 hindurchgeführt ist. Im Bereich des mit dem plattenförmigen Körper 28 verbundenen Endes des Schleppseilteils 27 ist dazu eine Schlaufe 30 vorgesehen, die im gezeigten Ausführungsbeispiel durch eine Preßhülse 31 geschlossen ist. An der Stelle der Preßhülse 31 kann die Schlaufe 30 auch durch einen Knoten geschlossen sein.

Der plattenförmige Körper 28 verfügt des weiteren über fünf gleiche Durchgangsbohrungen 32, die teilweise hintereinander- und teilweise nebeneinanderliegend angeordnet sind. Durch diese Durchgangsbohrungen 32 wird ein zum plattenförmigen Körper 28 weisender Endbereich des bannerseitigen Schleppseilteils 26 hindurchgezogen. Im gezeigten Ausführungsbeispiel ist zur Einstellung einer entsprechenden Seilreibungskraft zwischen dem plattenförmigen Körper 28 der Seilschlupfbremse 25 und dem Schleppseil 12 das Schleppseilteil 26 nur durch vier Durchgangsbohrungen 29 schlangenartig hindurchgesteckt. Ein freier Endabschnitt 33 des Schleppseilteils 26 ragt aus einer (letzten) Durchgangsbohrung 32 heraus. Die Länge dieses freien Endabschnitts 33 ist so bemessen, daß der Endbereich des Schleppseilteils 26 beim Beschleunigen des Banners 11 in ausreichendem Maße durch die Seilschlupfbremse 25 hindurchrutschen kann und es dabei zur Vergrößerung des Abstands zwischen dem Banner 11 und dem Schleppflugzeug 10 kommt, also um die Länge des freien Endabschnitts 33 das Schleppseil 12 verlängerbar ist. Um ein Hindurchrutschen des freien Endes des Endabschnitts 33 des Schleppseilteils 26 durch den plattenförmigen Körper 28 zu verhindern, ist das Ende des freien Endabschnitts 33 durch eine Preßhülse 34 verdickt. Alternativ kann auf dem Ende des freien Endabschnitts 33 auch ein Knoten angeordnet sein.

Die Fig. 6 zeigt eine Einrichtung zur Veränderung des Abstands zwischen dem Banner 11 und dem Schleppflugzeug 10, die als eine Art Seilfeder 35 ausgebildet ist. Die Seilfeder 35 ist im wesentlichen gebildet aus einem Nebenseil 36 und Verbindungsmitteln 37 zwischen dem Nebenseil 36 und dem Schleppseil 12.

Das Nebenseil 36 erstreckt sich - wie der Name schon sagt - neben dem Schleppseil 12, verläuft nämlich im wesentlichen geradlinig auf einer Verbindungsachse zwischen dem Schleppflugzeug 10 und dem Banner 11. Das Nebenseil 36 ist elastisch ausgebildet bzw. es weist eine größere Elastizität als das Schleppseil 12 auf. Insbesondere ist das Nebenseil 36 in Längsrichtung dehnbar. Es wirkt dadurch wie eine Art Feder.

Das Nebenseil 36 erstreckt sich nur über einen Teil der Länge des Schleppseils 12, verfügt also über eine geringere Länge als das Schleppseil 12. Gegenüberliegende Endbereiche des Nebenseils 36 sind mit jeweils einem Verbindungsmittel 37 mit dem Schleppseil 12 verbunden. Im gezeigten Ausführungsbeispiel ist zusätzlich noch ein mittiger Bereich des Nebenseils 36 über ein Verbindungsmittel 37 mit dem Schleppseil 12 verbunden. Ausreichend ist es, wenn zwei Verbindungsmittel 37 an gegenüberliegenden Endbereichen des Nebenseils 36 vorgesehen sind. Darüber hinaus ist es auch denkbar, mehr als drei Verbindungsmittel 37 zwischen dem Schleppseil 12 und dem Nebenseil 36 anzuordnen. Die Verbindungsmittel 37 sind im gezeigten Ausführungsbeispiel als Preßhülsen ausgebildet, die das Nebenseil 36 rutschfest mit dem Schleppseil 12 verbinden. Die Anordnung der Verbindungsmittel 37 auf dem Nebenseil 36 einerseits und dem Schleppseil 12 andererseits ist derart getroffen, daß bei gestrecktem, aber noch ungedehnten Nebenseil 36 sich zwischen den Verbindungsmitteln 37 ein Abschnitt des Schleppseils 12 befindet, dessen Länge größer ist als die Länge des Nebenseils 36 zwischen den Verbindungsmitteln 37. Das Schleppseil 12 weist dadurch zwischen jeweils zwei benachbarten Verbindungsmitteln 37 Buchten 38 auf. Diese Buchten 38 führen dazu, daß bei einer Belastung des Schleppseils 12 zunächst nur das straffe Nebenseil 36 belastet wird und sich mit zunehmender Zugkraft federartig längt, bis das Schleppseil 12 im Bereich der Buchten 38 straff gezogen ist und danach belastet wird. Das Nebenseil 36 bleibt gestrafft; wird aber gegen eine Überlastung und ein Reißen gesichert durch das straff gezogene Schleppseil 12 zwischen den Verbindungsmitteln 37. Durch die Beseitigung des Durchhangs des Schleppseils 12 in den Bereichen der Buchten 38 wird das Schleppseil 12 beim Beschleunigen des Banners 11 verlängert und dabei der Abstand des Banners 11 zum Schleppflugzeug 10 zur Verringerung der beim Aufnehmen des Banners 11 entstehenden Beschleunigungskräfte verlängert.

Alternativ zum in der Fig. 6 gezeigten Ausführungsbeispiel können auch mehrere Nebenseile 36 parallel verlaufend oder an unterschiedlichen Stellen des Schleppseils 12 vorgesehen sein. Im Falle mehrerer Nebenseile 36 ist es denkbar, den Nebenseilen 36 verschiedene Elastizitäten zuzuordnen, wodurch die Seilfeder 35 eine den Anforderungen gerecht werdende Federcharakteristik, insbesondere eine progressive Federcharakteristik, erhält.

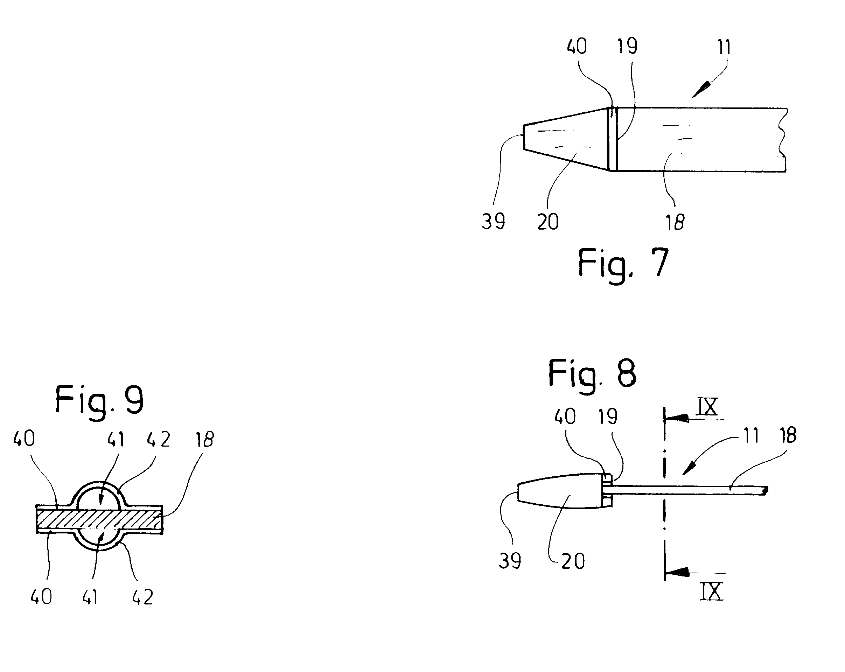

Die Fig. 7 bis 9 zeigen den als Randstabilisierungsmittel des Banners 11 ausgebildeten Luftsack 20. Der mit der hinteren Querkante 16 der Werbeträgerfläche 18 verbundene Luftsack 20 des Banners 11 ist schlauchförmig ausgebildet. Im gezeigten Ausführungsbeispiel verjüngt sich der schlauchförmige Luftsack 20 zu seinem der Querkante 16 der Werbeträgerfläche 18 weggerichteten Rückseite 39. An der Rückseite 39 ist der sich verjüngende Luftsack 20 entweder vollständig offen oder mit Luftaustrittsöffnungen versehen. Dadurch wird sichergestellt, daß die sich im Luftsack 20 während des Schleppens des Banners 11 sammelnde Luft durch den Luftsack 20 hindurchströmen kann, was eine Überbelastung (z.B. Platzen) des Luftsacks 20 auf einfache Weise verhindert. Diese Durchströmung des Luftsacks 20 mit Luft reicht aus, um den Luftsack 20 aufzublähen und dadurch das Banner 11 zu stabilisieren, indem der aufgeblähte Luftsack 20 die hintere Querkante 16 der Werbeträgerfläche 18 des Banners 11 stabilisiert und dadurch in einem ausgestreckten, geraden Zustand hält. Der Luftsack 20 kann gegebenenfalls in seiner Mantelfläche weitere Luftaustrittsöffnungen aufweisen.

Die mit der Querkante 16 der Werbeträgerfläche 18 verbundene Vorderseite des Luftsacks 20 ist im gezeigten Ausführungsbeispiel teilweise offen. Gemäß der Fig. 9 ist ein mittlerer Bereich zweier Randstreifen 40 des Luftsacks 20 auf gegenüberliegenden Seiten der Werbeträgerfläche 18 gewölbt zur Bildung von zwei gegenüberliegenden Lufteintrittsöffnungen 41 in den Luftsack 20. Damit beim Anschleppen des Banners 11 in den dann noch flachliegenden Luftsack 20 Luft eintreten kann, werden die Lufteintrittsöffnungen 41 offengehalten durch Randversteifungen 42 im Bereich der Randstreifen 40. Die Randversteifungen 42 können sich über die gesamte Länge jedes Randstreifens 40 erstrecken oder alternativ auch nur über den die Lufteintrittsöffnungen 41 umgebenden mittleren Bereich der Randstreifen 40. Gebildet sind die Randversteifungen 42 entweder durch in den Bereichen der Randstreifen 40 auf dem Luftsack 20 zusätzlich aufgenähte Materialbahnen oder mit den Randstreifen 40 verbundene Formkörper aus Kunststoff oder dergleichen. Bei diesen Formkörpern handelt es sich um Halbschalen oder ähnliche Formgebilde, die vorzugsweise stromlinienförmig gestaltet sind.

Es sind alternative Seilschlupfbremsen denkbar, die dadurch gebildet sind, daß das Schleppseil 12 in reibschlüssigem Kontakt mit einem abgebremsten bzw. schwer drehbaren Rad, einer Walze oder dergleichen steht. Weiterhin ist es denkbar, eine Seilschlupfbremse dadurch zu bilden, daß das Schleppseil 12 durch mindestens eine sich kontinuierlich verjüngende Öffnung gezogen wird, deren kleinster Durchmesser kleiner ist als der Durchmesser des Schleppseils 12.

## Patentansprüche

1. Luftschleppvorrichtung, insbesondere zur Luftwerbung, mit einem länglichen Banner (11) und mindestens einem mit dem Banner (11) in Verbindung stehenden Schleppseil (12), das lösbar mit einem Schleppflugzeug (10) verbunden ist, **dadurch gekennzeichnet**, daß das oder jedes Schleppseil (12) mindestens eine unter Last den Abstand des Banners (11) zum Schleppflugzeug (10) vergrößernde Einrichtung aufweist.

2. Luftschleppvorrichtung nach Anspruch 1, **dadurch gekennzeichnet**, daß die Einrichtung derart ausgebildet ist, daß sie insbesondere beim Aufnehmen des Banners (11) vom Schleppflugzeug (10) und die dadurch erfolgende Beschleunigung des Banners (11) zu einer stetig zunehmenden Zugbelastung wenigstens des Schleppseils (12) und/oder eine Begrenzung der vom Schleppseil (12) auf den Banner (11) ausgeübten Zugkraft führt.

3. Luftschleppvorrichtung nach einem der vorhergehenden Ansprüche, **dadurch gekennzeichnet**, daß die Einrichtung als eine Seilschlupfbremse (21, 25) und/oder Seilfeder (35) ausgebildet ist.

4. Luftschleppvorrichtung nach einem der vorhergehenden Ansprüche, **dadurch gekennzeichnet**, daß die Seilschlupfbremse (21, 25) zwischen getrennten Schleppseilteilen (26, 27) angeordnet ist, wobei die Seilschlupfbremse (21, 25) vorzugsweise die Schleppseilteile (26, 27) verbindet.

5. Luftschleppvorrichtung nach einem der vorhergehenden Ansprüche, **dadurch gekennzeichnet**, daß die Seilschlupfbremse (25) im Verlauf des ununterbrochenen Schleppseils (12) angeordnet ist.

6. Luftschleppvorrichtung nach einem der vorhergehenden Ansprüche, **dadurch gekennzeichnet**, daß die Seilschlupfbremse (21, 25) im wesentlichen aus einem platten- bzw. scheibenförmigen Körper (22, 28) mit mindestens zwei Durchgangsbohrungen (23, 32) zum Hindurchstecken des Schleppseils (12) besteht.

7. Luftschleppvorrichtung, insbesondere zur Luftwerbung, mit einem länglichen Banner (11) und mindestens einem mit dem Banner (11) in Verbindung stehenden Schleppseil (12), das mit einem Schleppflugzeug (12) lösbar verbunden ist, **dadurch gekennzeichnet**, daß das Banner (11) mindestens ein durch Luft aufblähbares Randstabilisierungsmittel aufweist.

8. Luftschleppvorrichtung nach einem der vorhergehenden Ansprüche, **dadurch gekennzeichnet**, daß das Randstabilisierungsmittel nach Art eines Luftsacks (20) ausgebildet ist, der vorzugsweise aus einem biegeschlaffen Material, insbesondere einem textilen Material, gebildet ist.

9. Luftschleppvorrichtung nach einem der vorhergehenden Ansprüche, **dadurch gekennzeichnet**, daß der Luftsack (20) mit dem übrigen Teil des Banners (11), insbesondere einer Werbeträgerfläche (18) desselben, verbunden ist.

10. Luftschleppvorrichtung nach einem der vorhergehenden Ansprüche, **dadurch gekennzeichnet**, daß der Luftsack (20) einer hinteren Querkante (19) der Werbeträgerfläche (18) des Banners (11) zugeordnet ist, vorzugsweise mit der Querkante (19) lösbar oder unlösbar verbunden ist.

11. Luftschleppvorrichtung nach einem der vorhergehenden Ansprüche, **dadurch gekennzeichnet**, daß ein der hinteren Querkante (19) der Werbeträgerfläche (18) zugeordneter vorderer Bereich des Luftsacks (20) mindestens teilweise offen ist, insbesondere mindestens eine Lufteintrittsöffnung (41) aufweist, und vorzugsweise dem offenen, vorderen Randbereich des Luftsacks (20) bzw. den Lufteintrittsöffnungen (41) Randversteifungen (42) zugeordnet sind zum Offenhalten der Vorderseite des Luftsacks (20) bzw. der Lufteintrittsöffnungen (41).

12. Luftschleppvorrichtung nach einem der vorhergehenden Ansprüche, **dadurch gekennzeichnet**, daß der Luftsack (20) vorzugsweise hintere und/oder seitliche Luftaustrittsöffnungen aufweist.

13. Luftschleppvorrichtung nach einem der vorhergehenden Ansprüche, **dadurch gekennzeichnet**, daß der Luftsack (20) als ein sich zu seiner Rückseite (39) hin verjüngender Schlauch ausgebildet ist und vorzugsweise die Rückseite (39) ganz oder teilweise offen ist zur Bildung mindestens einer Luftaustrittsöffnung.
